# EUROPEAN PATENT APPLICATION

(11) **EP 2 706 702 A2**
(43) Date of publication of application: **12.03.2014**
(21) Application number: 13182822.0
(22) Date of filing: 03.09.2013
(51) Int. Cl.: H04L 12/26, H04L 29/08

(54) **System and method for configuring an electronic sign for operation at an advertising site**

(30) Priority: 05.09.2012 US 201213603545
(71) Applicant: Sony Corporation, Tokyo 108-0075 (JP)
(72) Inventor: Patil, Abhishek, San Diego, CA 92127 (US); Agnihotri, Tanmay, San Diego, CA 92128 (US); Kim, Dongwook, San Diego, CA 92127-1898 (US)
(74) Representative: DeVile, Jonathan Mark

(57) **Abstract**

An electronic sign includes at least one display, at least one processor controlling the display, and at least one computer readable storage medium accessible to the processor and storing a preprogrammed network address of a control server. The medium is programmed with instructions to cause the processor to automatically, upon initial energization at an advertising site having plural wireless routers all on a common subnet, connect to a wireless router at the advertising site to join the common subnet. The instructions also cause the processor to access the control server using the network address of the server after joining the common subnet. Additionally, the instructions cause the processor to receive, from the control server, configuration information useful in configuring the sign for operation so that the electronic sign, after mechanical installation, does not need to be physically accessed by a technician to further configure the sign for operation.

## Description

### I. FIELD OF THE INVENTION

The present application relates generally to easily and automatically configuring an electronic sign for operation at an advertising site.

### II. BACKGROUND OF THE INVENTION

The use of electronic sign systems has grown in use in recent years. These electronic signs and their associated systems are useful for many purposes, such as advertising and public displays of information. Televisions (TVs) are used as electronic signs in many of these systems.

However, present principles recognize that installation of these electronic signs, as well as causing them to join a network of electronic signs to thereby be controlled remotely, has proven difficult and labor intensive. For instance, an electronic display may be disposed at a height that is not easily reachable for a technician, making it difficult to control and update the electronic sign's software.

### SUMMARY OF THE INVENTION

Various respective aspects and features of the invention are defined in the appended claims. Combinations of features from the dependent claims may be combined with features of the independent claims as appropriate and not merely as explicitly set out in the claims.

Thus, present principles recognize that deployment, control, and updates to electronic signs should involve minimal direct, physical action at each electronic sign. Present principles also recognize the need for electronic sign systems to have adequate security so that they are protected from, e.g., network attacks and hacking.

Accordingly, an electronic sign includes at least one display, at least one processor controlling the display, and at least one computer readable storage medium accessible to the processor and storing a preprogrammed network address of a control server. The medium is programmed with instructions to cause the processor to automatically, upon initial energization at an advertising site having plural wireless routers all on a common subnet, connect to a wireless router at the advertising site to join the common subnet. The instructions also cause the processor to access the control server using the network address of the server after joining the common subnet. Additionally, the instructions cause the processor to receive, from the control server, configuration information useful in configuring the sign for operation so that the electronic sign, after mechanical installation, does not need to be physically accessed by a technician to further configure the sign for operation.

In some embodiments, the subnet may afford Internet access and the preprogrammed network address may be an Internet Protocol (IP) address of a control server on the Internet. In other embodiments, the subnet may not afford Internet access and the preprogrammed network address may thus be an address of a control server on the subnet. Thus, the control server may not always communicate over the Internet.

Therefore, in some embodiments the processor may be configured to, after joining the common subnet, determine if the Internet can be accessed through the subnet. Responsive to a determination that the Internet can be accessed through the subnet, the processor may establish a secure connection with the control server using the preprogrammed address and obtain information therefrom pertaining to a local server on the subnet to configure the sign to communicate with the local server on the subnet. However, responsive to a determination that the Internet cannot be accessed through the subnet, the processor may establish communication with the local server on the subnet.

In addition, the processor may also be configured to receive from the control server information pertaining to software updates, if desired. Also if desired, the configuration information may include an Internet Protocol (IP) address and a subnet address.

In another aspect, a system includes a subnet including plural nodes. The system also includes at least one electronic sign that includes a display and a processor controlling the display. It is to be understood that the electronic sign therefore establishes a node in the subnet. In addition, the system includes at least one control server that itself includes a processor communicating with the processor of the electronic sign over the subnet to exchange at least one configuration message with the electronic sign. Accordingly, the control server also establishes a node in the subnet. The at least one configuration message is understood to be useful for configuring the electronic sign for operation upon initial energization of the electronic sign at an advertising site. Moreover, it is to be understood that a processor of a node in the subnet determines that one of the configuration messages was successfully sent to another node in the subnet at least based on receipt of a reply message. Also, the processor of the node that sent the configuration message determines the configuration message was unsuccessfully received by the node to which it was sent upon expiration of a timer without receiving a reply message.

In still another aspect, a method includes automatically, upon initial energization of a digital sign at an advertising site having at least one wireless router on a subnet, connecting the digital sign to a wireless router at the advertising site and joining the subnet. The method further includes accessing a control server on the subnet and receiving from the control server at least one configuration packet useful in configuring the sign for operation. The configuration packet is understood to include a subnet-unique security field in the packet header or tail, where the subnet-unique security field is derived from an algorithm using a subnet-unique secret key.

The details of the present invention, both as to its structure and operation, can be best understood in reference to the accompanying drawings, in which like reference numerals refer to like parts, and in which:

### BRIEF DESCRIPTION OF THE DRAWINGS

Embodiments of the invention will now be described with reference to the accompanying drawings, throughout which like parts are referred to by like references, and in which:
Figure 1 is a block diagram of a non-limiting example system in accordance with present principles;
Figures 2-4 show an exemplary network including at least one subnet;
Figure 5 is a flow chart of example logic to be executed by a processor of an electronic sign to connect to a local control server or an Internet control server;
Figure 6 is a graphical representation of transmission and processing times for messages and packets sent from one node in accordance with present principles;
Figure 7 is an illustration of an exemplary message to be sent over a network and/or subnet in accordance with present principles;
Figures 8-10 are exemplary illustrations of server discovery and authentication processes in accordance with present principles;
Figure 11 is a flow chart of example logic to be executed by a node joining a network/subnet in accordance with present principles; and
Figure 12 is an exemplary flow chart to be executed by a control server when a node such as an electronic sign seeks to join a network and/or subnet.

### DETAILED DESCRIPTION OF THE PREFERRED EMBODIMENT

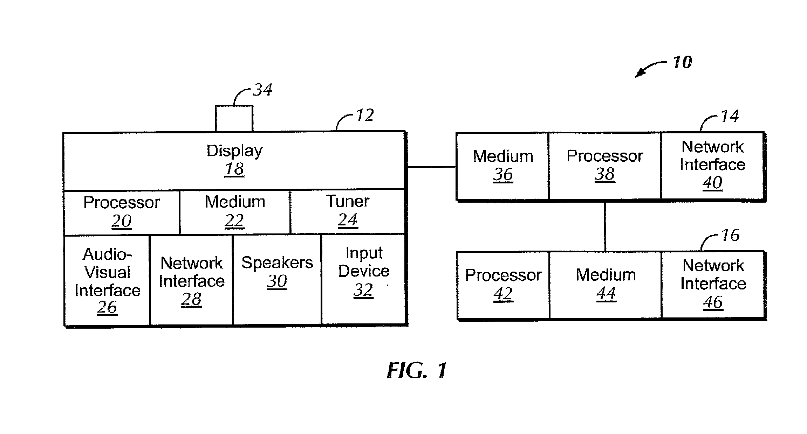

Referring initially to the exemplary embodiment shown in Figure 1, an exemplary subnetwork ("subnet") generally designated 10 is shown. The system 10 includes at least one electronic sign 12, at least one router 14, and at least one server 16. The electronic sign 12 may be, by way of example, a television such as a high-definition television (TV). However, it is to be understood that present principles may also be applied to electronic signs (mobile, indoor, and outdoor) such as, but not limited to, Internet-enabled TVs, smart TVs, big screen TVs, "jumbotrons," computer monitors, or any other type of suitable display such as digital displays, plasma displays, LCD displays, LED displays, OLED displays, ELD displays, projectors and projector displays, digital posters, tablet computers (e.g., moveably mounted on a surface), touch-screen displays (e.g., smartphones that may be moveably mounted on a surface), signage vests (e.g., to be worn by a person), segment displays, both two dimensional and three dimensional displays, head-mounted displays, cathode ray tube displays, etc. Thus, note that in some embodiments, the electronic sign 12 may be a Sony Bravia high-definition television manufactured by Sony Corporation.

Regardless, the electronic sign 12 includes a display 18 for presenting, e.g., information and advertisements to viewers and may therefore present, e.g., user interfaces, video, audio, and/or images for such purposes. The electronic sign 12 also includes at least one processor 20 controlling the display 18, at least one tangible computer readable storage medium 22 such as disk-based or solid state storage, at least one TV tuner 24, and optionally at least one audio/video interface 26 to communicate with other devices electrically connected to the electronic sign 12 such as, e.g., a set-top box, a DVD player, or a video game console over, e.g., an HDMI connection. The electronic sign 12 also includes at least one network interface 28 for communication over a network such as the Internet and/or a subnet in accordance with present principles, and may be, e.g., a wired or wireless modem or router, or other appropriate interface such as, e.g., a wireless telephony transceiver. Thus, the network interface 28 provides connectivity to the router 14 and server 16 in accordance with present principles, it being understood that the router 14 and server 16 also have respective network interfaces (to be described shortly) for facilitating such connectivity.

In addition to the foregoing, the electronic sign 12 may include one or more speakers 30 for outputting audio signals. Thus, in addition to receiving information over a subnet in accordance with present principles, it may also be appreciated that the electronic sign 12 may receive audio-video programs and/or other content from sources such as, e.g., the Internet, cable TV providers, and satellite TV provider to thereby present the content under control of the processor 20 on the display 18 and speakers 30. Moreover, note that in some embodiments commands to the processor 20 may be received not only over a subnet but also through one or more input devices 32 such as mice, keyboards, keypads, remote controls, touchpads, touch screens, etc. Also shown on the exemplary electronic sign 12 is at least one camera 34 that may be, e.g., a thermal imaging camera, a digital camera such as a webcam, and/or camera integrated into a TV and controllable by the processor 20 to gather pictures/images and video of viewers of the electronic sign for, e.g., marketing purposes, advertisement effectiveness analysis, and viewer reaction analysis using facial recognition technology.

As mentioned above, also shown in Figure 1 is a router 14. The router 14 may be a wired and/or wireless router and includes at least one processor 36 and at least one tangible computer readable storage medium 38 such as disk-based or solid state storage. The router 14 also includes at least one interface 40 such as, e.g., a network interface. It is to be understood that the at least one interface 40 provides connectivity to networks and subnets such as, e.g., the Internet, WANs, LANs, etc. and enables the router 14 to control and/or route traffic over a network and/or subnet under control of the processor 36 in accordance with present principles, and indeed can establish at least in part a network and/or subnet.

As mentioned above, Figure 1 also shows at least one server 16. The server 16 includes at least one processor 42 and at least one tangible computer readable storage medium 44 such as disk-based or solid state storage. As indicated above, the server 16 includes at least one network interface 46 for communication over a network and/or subnet in accordance with present principles and may be, e.g., a wired or wireless modem or router, or other appropriate interface such as, e.g., a wireless telephony transceiver. Thus, the network interface 46, under control of the processor 42, allows for communication with the electronic sign 12 via the router 14 over a network and/or subnet through, e.g., the respective interfaces 28 and 40. Accordingly, the electronic sign 12, router 14, and server 16 establish nodes of a network and/or subnet in accordance with present principles.

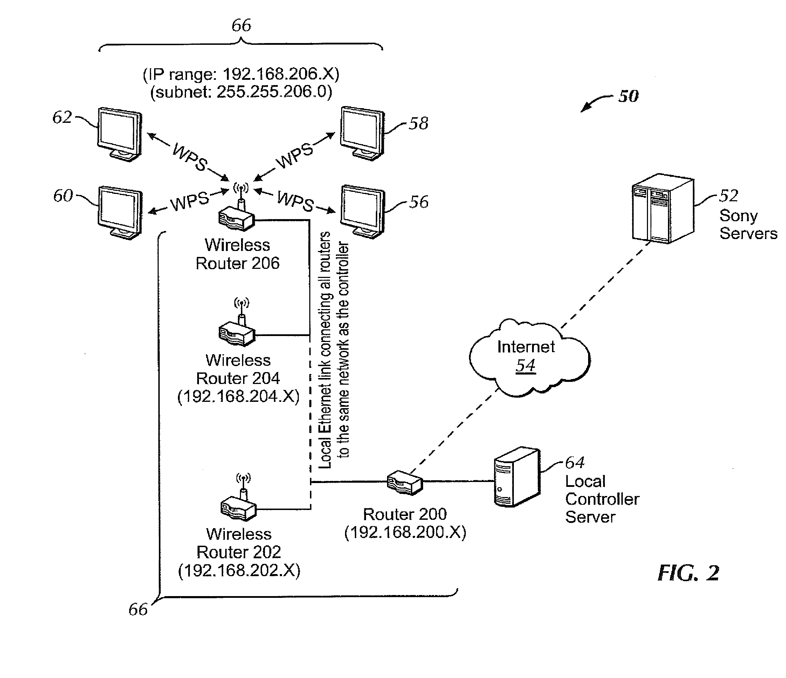

Turning to Figure 2, an exemplary network 50 including at least one subnet is shown. The network 50 includes at least one Internet server 52 that may be, e.g., a proprietary Sony server manufactured and/or controlled by Sony Corporation. The Internet server 52 communicates over the network 50 via the Internet 54.

Plural routers are also shown in Figure 2. Thus, a router 200, router 202, router 204, and router 206 are shown, but it is to be understood that more or less routers may be included in the network 50. The routers 200, 202, 204, and 206 may be wired and/or wireless routers. Note that the router 200 is shown as being connected to the Internet 54, and hence may route an Internet connection to other nodes on the network 50, including the routers 202, 204, and 206, as well as routing an Internet connection to plural electronic signs such as the signs 56, 58, 60, and 62 shown in Figure 2. In other words, the router 200 may be a gateway router allowing subnet access to the Internet.

Also shown in Figure 2 is a local control server 64 that, in exemplary embodiments, is not an Internet server per se in that it may not be connected to the Internet directly or at all in some implementations. Moreover, note that the local control server 64 may be a server located at or near the site where the electronic signs 56, 58, 60, and 62 are located.

As may be appreciated from Figure 2, the wireless router 206 at least in part defines a common subnet 66 comprised at least of the electronic signs 56, 58, 60, 62 and routers 200, 202, 204 and 206. In exemplary embodiments, the common subnet 66 may also include the server 64. However, it is to be understood that the subnet 66 and hence the router 206 and electronic signs 56, 58, 60, and 62 may be a part of smaller or larger subnets, are part of the network 50, and can communicate over the network 50 in accordance with present principles through, e.g., one or more of the routers shown in Figure 2.

Moreover, it is to be understood that the electronic signs 56, 58, 60, and 62 are substantially similar in function and configuration to the electronic display 12 described above, that the routers 200, 202, 204, and 206 are substantially similar in function and configuration to the router 14 described above, and that the servers 52 and 64 are substantially similar in function and configuration to the server 16 described above. Furthermore, note that each of the servers 52 and 64, electronic signs 56, 58, 60, and 62, and routers 200, 202, 204, and 206 may establish respective network and/or subnet nodes in accordance with present principles. Even further, the nodes may be connected to each other and hence the network 50 via any suitable means such as, e.g., a Wi-Fi connection, an Ethernet connection, one or more cable connections, etc.

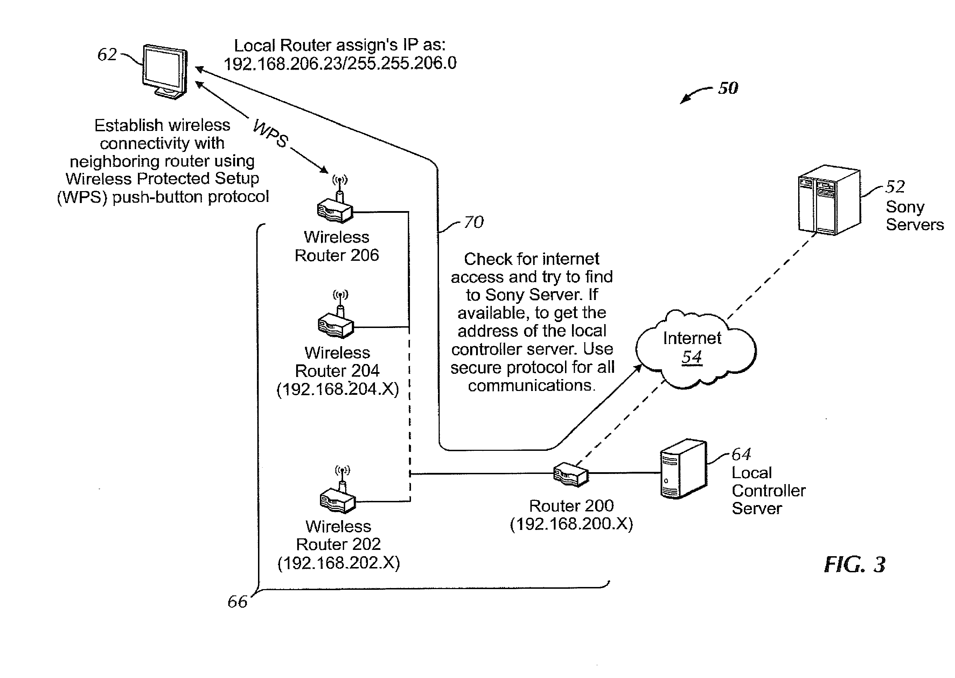

Now in reference to Figure 3, the network 50 described above is again shown. As may be appreciated from Figure 3, the electronic sign 62 is shown trying to automatically connect to the wireless router 206 to join a network and/or at least one common subnet such as the subnet 66 described above. It is to be understood that in the exemplary embodiment shown, the electronic sign 62 (and also in some embodiments, one or more routers such as the routers 204 and 206) is located at a site where the electronic sign 62 is to present advertising and/or other content to one or more viewers. The site may be a public place such as a park, mall, city street, office building, events center, etc. Thus, also in exemplary embodiments, the electronic sign 62 initiates automatic connection to connect and joins at least one subnet upon initial energization (e.g., power on) at an advertising site. As indicated by Figure 3, the electronic sign 62 may connect to the wireless router 206 using wireless protected setup (WPS) technology and its corresponding push-button control, though other suitable means may be used.

Continuing in reference to Figure 3, an arrow 70 is shown as indicating that the electronic sign 62, after joining the common subnet 66, then determines whether the subnet 66 affords Internet access for the sign 62 to connect to and access a control server over the Internet (such as the server 52) so that the server may provide, e.g., configuration information, software updates and information pertaining thereto, advertisements and other information, etc., to the electronic sign 62 in accordance with present principles. Moreover, note that the configuration information may contain details (e.g., IP) of the local controller server to connect for further/later updates.

Therefore, note that in exemplary embodiments, a computer readable storage medium on the sign 62 is understood to store and/or be preprogrammed with a network address of the Internet control server that is useful for connecting to and accessing the control server. Note that "preprogrammed" at least means that the address was stored on the storage medium prior to energization of the sign 62 at the advertising site. However, the network address may have also or instead been provided to the sign 62 by, e.g., an administrator of the subnet 66 upon energization of the sign 62, e.g., before the sign 62 attempts to access the Internet control server 52.

Regardless, if the electronic sign 62 determines that it can connect to and access the server 52 over the Internet 54 using the preprogrammed network address, the electronic sign 62 and server 52 exchange at least configuration information useful in configuring the sign 62 for operation. The sign 62 and server 52 may also exchange additional network and subnet address information (e.g., network and subnet addresses (e.g., IP addresses) of the electronic sign 62, - local control server 64, and other nodes on the common subnet 66) in addition to still other information using a secure connection and/or protocol, as will be described more fully below.

With more specificity, the sign 62 can obtain information from the Internet control server 52 pertaining to a local server on the common subnet 66 (e.g., the local control server 64), to configure the sign 62 to communicate with the local server 64 on the subnet 66. The information may include, e.g., the network address and subnet address of the local control server 64.

It is to be understood that the secure connection may be established at least in part by a processor on the sign 62 using, e.g., the preprogrammed address described above. Thus, it may be appreciated that configuration information is to be exchanged for use by the sign 62 so that the electronic 62 sign, after mechanical installation at the advertising site, need not be physically accessed by a technician to configure the sign 62 for operation.

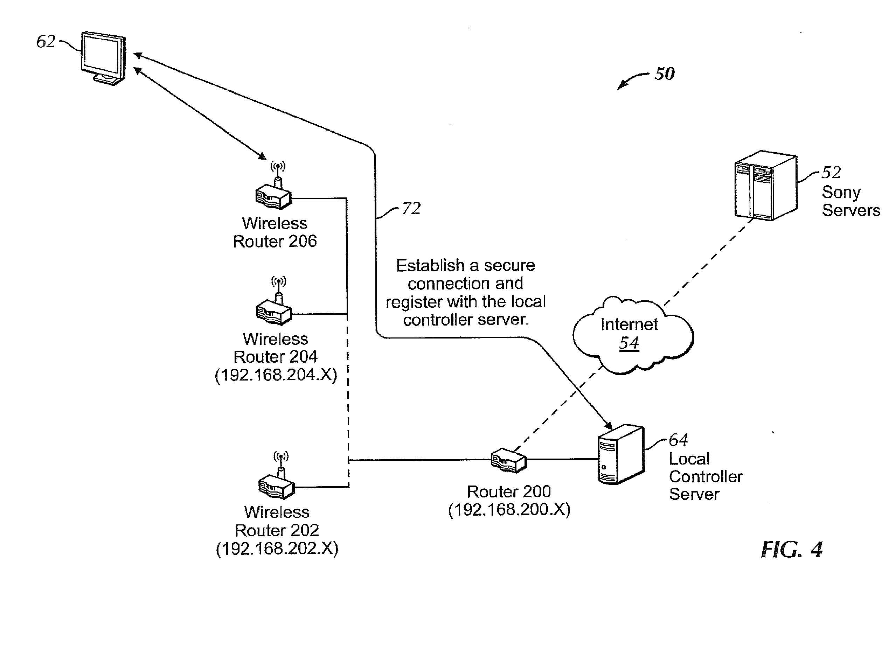

Moving on to Figure 4, the network 50 including the sign 62 and servers 52 and 64 is once again shown. Also shown in Figure 4 is an arrow 72 indicating that the sign 62 is trying to establish a secure connection, access, and/or register with the local control server 64 in accordance with present principles. The sign 62 may do so after receiving network information and/or at least one address of the local control server 64 from the Internet control server 52 as set forth herein.

However, if the sign 62 determines that the subnet 66 does not afford Internet access, or that the Internet control server 52 nonetheless cannot be accessed even if Internet access is afforded, the processor on the sign 62 may still establish communication with and/or access to the local control server 64 on the subnet 66.

Thus, communication and/or access can be established using a network and/or subnet address for the local control server 64 preprogrammed into a computer readable storage medium of the sign 62, although other device discovery principles and methods as may be appreciated by those in the art may be used in addition to or in lieu of using the preprogrammed address. Again note that "preprogrammed" at least means that the network and/or subnet address was provided to the storage medium of the sign 62 prior to energization of the sign 62 at the advertising site. However, the network and subnet addresses may have also been provided to the sign 62 by, e.g., an administrator of the subnet 66 upon energization of the sign 62 before the sign 62 attempts to access a server. Regardless, it may be appreciated that if Internet access is not afforded by the subnet 66, the local control server 64 does not communicate with the Internet but may nonetheless provide configuration information, advertising content, and still other information to the sign 62 over the subnet 66.

Accordingly, it is to be understood that routers at a customer/advertising site are configured to be on the same subnet (e.g., 255.255.206.0) and IP range (e.g., 192.168.x.y., where x is each router's subnet). All clients (e.g., electronic signs) connected to a router are assigned IP via dynamic host configuration protocol (DHCP) and are also part of the main subnet (e.g., 255.255.206.0). This way each device can see every other device on subnet and even the main network.

In addition to the foregoing, present principles also recognize that in some instances, the advertising site may seek to block access to the Internet at some point (e.g., prior to connecting to the Internet control server or after initially connecting to the Internet control server to exchange configuration information and electronic sign software updates). In such a case, the default configuration in the client devices (e.g., the electronic signs to be deployed) would be to search for the local controller server on a known IP (e.g., 192.168.200.200).

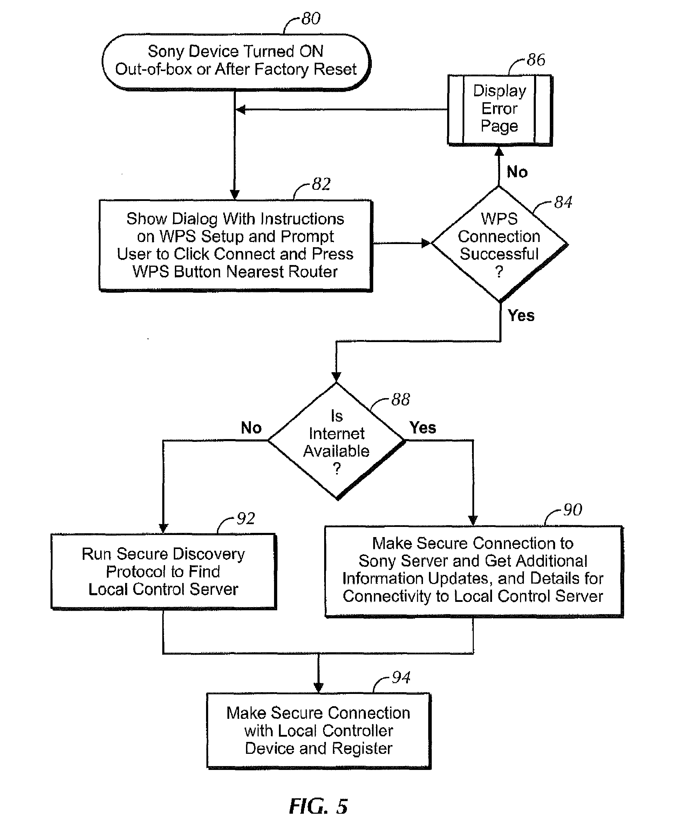

Moving on, reference is now made to Figure 5, which is a flow chart of example logic to be executed by a processor of an electronic sign (such as, e.g., the sign 62 described above) for connecting to a local control server or Internet control server in accordance with present principles. The logic begins at oval 80, where an electronic sign such as any of those described above (e.g., a TV manufactured by Sony Corporation) is turned on at, e.g., an advertising site where the sign is to be used to present advertising and/or other content to viewers. The logic then moves to block 82 where the logic presents a dialog box/user interface on a display of the electronic sign that includes instructions for a technician to connect the sign to a local router using WPS. Thus, a prompt may be presented at block 82 instructing a technician to configure the sign to connect with the nearest local router and press a WPS button on the router to facilitate WPS connection.

The logic of Figure 5 then moves to decision diamond 84, where the logic determines whether a WPS connection to a local router has been successfully made. If one has not, the logic moves to block 86 where an error message and/or page is presented on a display of the electronic sign, and thereafter the logic may revert back to block 82. However, if a WPS connection has been successfully made, and hence the sign has joined a common subnet in accordance with present principles, the logic instead moves from decision diamond 84 to decision diamond 88. At decision diamond 88, the logic determines whether an Internet connection is available. If one is available, the logic proceeds to block 90 where a secure connection is made to an Internet control server using the Internet connection. Also at block 90, after making the secure connection, the logic may gather additional information, updates (e.g., software updates for the electronic sign), and details (e.g., network and subnet addresses) for connecting to a local control server (e.g., a local control server at or near the advertising site of the electronic sign) in accordance with present principles.

However, if at decision diamond 88 the logic determines that an Internet connection is not available, the logic does not proceed to block 90 but instead proceeds to block 92. At block 92 the logic runs a secure discovery protocol to find and/or access the local control server. This may be done using, e.g., a preprogrammed address for the local control server as described above.

Regardless of whether the logic proceeds to block 90 or block 92 after decision diamond 88, the logic proceeds from either of blocks 90 and 92 to block 94. At block 94, the logic makes a secure connection to the local control server to access it and, in some embodiments, register the electronic sign therewith.

Accordingly, it may now be appreciated that an electronic sign may relatively easily establish a connection with either or both an Internet control server and a local control server. Present principles recognize that the disclosure set forth herein may be particularly useful when deploying a large number of electronic signs and other devices while requiring minimal user/technician involvement and reducing the setup time for each electronic sign/device, particularly given that many signs/devices are mounted/deployed at an elevation (e.g., a hard to reach place).

As indicated above, a secure connection/protocol may be used to exchange information between an electronic sign and a control server. This may be necessary since the electronic signs and control servers may be communicating at least partially over a wireless network or subnet. Present principles recognize that such wireless mediums may be prone to unreliable message delivery as well as hacking.

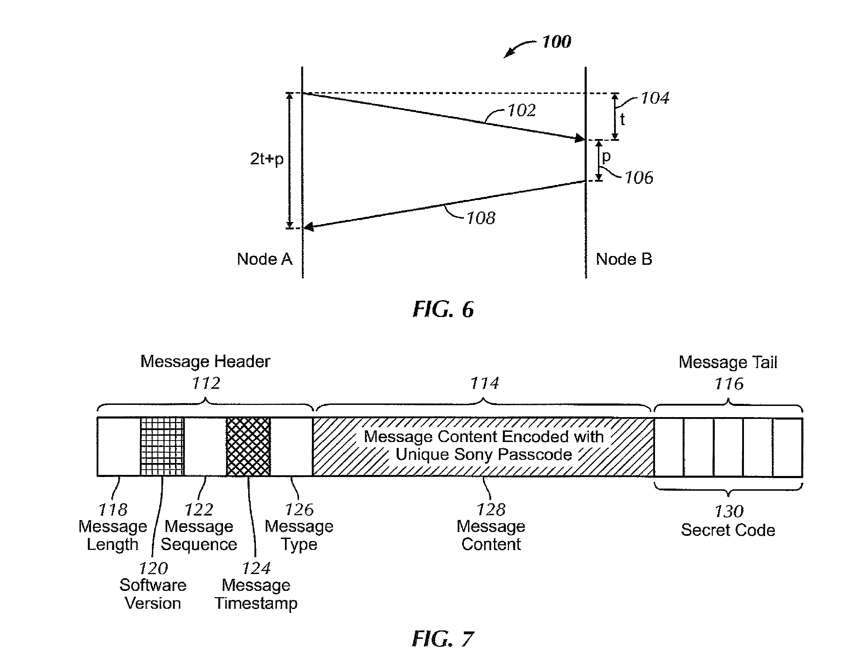

Particularly regarding message loss, present principles employ a message timer and retry mechanism to be shortly described to remedy any message lost. Accordingly, reference is now made to Figure 6, which shows a graphical representation 100 of transmission and processing times for messages and packets sent from one node to another in accordance with present principles.

But first, it is to be understood that a processor of a node on a subnet may determine that a message or packet (messages and/or packets referred to hereafter only as messages for clarity) has been successfully received upon receiving a reply message from the node to which the message was sent. The reply message may include, e.g., a receipt confirmation that the node to which the message was sent received the message in its entirety. However, there may be instances when a reply message is not received by the sending node if, e.g., the initial message was not successfully received. Therefore, present principles recognize that a timer may be used for determining when the processor of the sending node should resend the message (e.g., upon expiration of the timer without receiving a reply message). The parameters for such a timer are illustrated in the graphical representation of Figure 6.

Now specifically regarding what is shown in Figure 6, it is to be understood that "*t*" defines the maximum time it takes for a message to reach a node one "hop" away from the sending node (e.g., the nearest node in the subnet and/or the next node in a sequence of nodes). It is to also be understood that "*p*" defines the upper bound (e.g. maximum) on the time required for a receiving node to process a message, which may include any queuing delay. The sending node sets a timer based on these parameters after sending any message (including, e.g., broadcast, configuration, etc.). Thus, timer value may at least be *(2t* + p). As may be appreciated from Figure 6, the graphical representation 100 includes an arrow 102 indicating transmission of a message from a sending node, designated as Node A, to a receiving node, designated as Node B.

The vertical axes on each side of the graphical representation 100 of Figure 6 are understood to represent time such that arrows 104 show "*t*" as being the maximum time for the message to reach Node B and arrows 106 show "p" as being the maximum time for Node B to process the message before sending a reply message back to Node A, as indicated by the arrow 108. Accordingly, it may be appreciated that Node A sends a message to Node B and Node B send a message back to Node A. Because the maximum message processing time at Node B may also be accounted for before resending a message from Node A, it may now be appreciated that the timer value may be at least (*2t* + p), as indicated above.

However, note that if desired, greater values for the timer may be chosen to make the protocol "less aggressive" while increasing its latency, all without compromising its correctness. Furthermore, note that if Node A does not receive a reply message before the timer expires, it may retry to send the message "*r*" times after respective expiration of the timer. Therefore, in some embodiments the maximum time before a sending node times out and aborts message transmission altogether may be *r(2t + p).*

Moving on, the following description provides details of messages exchanged during the initial setup, authentication, and/or configuration of an electronic sign at, e.g., an advertising site. It is to be understood that at least for security reasons (e.g., to avoid replay attack), each message may be tagged with a timestamp and sequence number along with the sending node's MAC address. This also helps prevent, e.g., a broadcast storm for broadcast messages transmitted over multiple nodes.

However, in some implementations messages may be sent using a message security protocol that does not use timestamp information. Such an implementation makes use of *md5sum* for checksum message integrity and *openssl* for generating keys and encryption/decryption. During a connection phase in accordance with present principles, two nodes exchange their public keys. One node encrypts a unique phrase with the neighbor's public key and adds a checksum to the message, which will be described further below. The recipient node decrypts and validates the message integrity and checks the decrypted message for correctness, as also described below.

The following description provides, e.g., a security algorithm that may be used when transmitting messages between nodes in accordance with present principles. Thus, it is to be understood that every transmitted message may end with a unique "secret code." Furthermore, the secret code may be repeated particular number of times so that, should the secret code be hacked, a hacker may nonetheless be unable to manipulate the system without knowing how many times the "secret code" is to be repeated in the message. The fact that the secret code may be repeated a particular number of times also ensures that the entire message was received by the receiving node without any error.

Moreover, present principles recognize that, before processing the contents of a received message, the receiving node may first determine if the entire secret code (e.g., provided in the message header and/or tail) was received properly. In exemplary implementations, the secret code is different and unique for each particular advertising site, subnet of electronic signs, and/or system, thereby providing a measure of separation and preventing hacking attacks at a first advertising site due to breach of security at second advertising site that may be operated by, e.g., a different advertiser also using Sony Corporation electronic signs. Therefore, in accordance with present principles, the secret code may be preprogrammed and/or preloaded into the storage medium of each node in a subnet prior to energization of the node and its connection to the subnet at an advertising site.

Thus, for example, an advertiser may order four more Sony electronic signs to add to a subnet already including ten Sony electronic signs. The four additional electronic signs may be preprogrammed with the secret code designated for that particular advertising site by, e.g., Sony Corporation, prior to arriving at the advertising site and being energized there. Note that addresses such as a subnet address or server address may be preprogrammed in the same fashion in accordance with the disclosure below. However, if desired the secret code may also be provided to node by, e.g., an administrator of the subnet upon energization of the node at the advertising site before the node attempts to connect to/join the subnet.

Thus, it is to be further understood that in exemplary embodiments, the "secret code" may be a subnet-unique security field repeated a predetermined number of times. The predetermined number of times may be known to both a control server and electronic sign before the electronic sign is initially energized to communicate over the subnet. Moreover, the security field may be derived from an algorithm using a subnet-unique secret key, where the secret key is stored on the electronic sign before the electronic sign is initially energized to communicate over the subnet such that it is available to the processor of the electronic sign to communicate over the subnet when the electronic sign is initially energized. Also, the secret key may be provided to both the control server and electronic sign by a communication means other than transmission over the subnet in exemplary embodiments.

Therefore, in accordance with present principles, exemplary message codes for discovery, connection, and/or authentication messages to be described further below may be as follows:

| | |
|---|---|
| #define MSG_DISC_REQ | 0x60 /* Discovery request message */ |
| #define MSG_DISC_RSP | 0x70 /* Discovery response message */ |
| #define MSG_CONN_REQ | 0x80 /* Connection request message */ |
| #define MSG_CONN_CFM | 0x90 /* Connection response message */ |
| #define MSG_DCONN_REQ | 0xA0 /* Disconnect request message */ |

Additionally, exemplary message constants may be as follows:

| | |
|---|---|
| #define SW_VERSION | 1 |
| #define SONY_SECRET_CODE | 0x5A /* pad a message packet for additional protection */ |
| #define CODE_LENGTH 4 | /* number of times the above code is to be padded */ |

The table below indicates the general format for an exemplary message, which may be as follows:

| | | | | | |
|---|---|---|---|---|---|
| **Field descriptor** | SOFTWAE | Transaction | MESSAGE | MESSAGE | SECRET CODE (1 byte) repeated |
| **Size (bytes)** | 1 | 2 | 1 | Message Length | CODE LENGTH |

Accordingly, an exemplary electronic sign system may exchange and/or transmit messages between nodes using message codes and message constants to transmit a message such as the exemplary one shown in Figure 7, which is an illustration of an exemplary message 110. The message 110 includes a message header 112, message body 114, and message tail 116. The message header 112 includes information regarding, e.g., message length 118, software version 120, message sequence 122, message timestamp 124, and message type 126. The message body 114 includes the message content 128 that may be encoded with a unique passphrase/passcode, it being understood that the passphrase may be unique relative to, e.g., the manufacturer of the devices in a given electronic sign system (e.g., Sony Corporation), or may be unique to the system itself as determined by, e.g., a sign network administrator. Regardless, Figure 7 also shows that the message tail 116 may include the secret code described above.

Continuing the detailed description, as noted above, one or more nodes may discover and connect to other nodes (e.g., an electronic sign, when initially energized, will discover and connect to a control server). In exemplary embodiments, the discovery and corresponding connections made by, e.g., an electronic sign, may be done securely such that a message such as a discovery request message is kept secure and immune to malicious attacks. In accordance with the foregoing, exemplary timeout and retry values for the discovery process are shown below.

For, e.g., a proprietary Sony server discovery (possibly over the Internet):

| | |
|---|---|
| #define TIMEOUT_DISC_REQ | 10000000 /* 10 second */ |
| #define RETRY_NET_SCAN 20 | |

For, e.g., a local control server discovery (possibly on a local network):

| | |
|---|---|
| #define TIMEOUT_DISC_REQ | 1000000 /* 1 second */ |
| #define RETRY_NET_SCAN 3 | |

Particularly regarding discovery request messages, note that the message may be sent from a proprietary device (e.g., a Sony TV in a Sony system, as referenced below as an example) such as an electronic sign energized at a customer site which is sent out in an attempt to find and connect to a Sony Internet server or local control server, which may also be a Sony server. Again, note that this message may be proprietary to the Sony network and will thus only be acknowledged by Sony software running on the Sony Internet server or a local controller server.

Furthermore, to protect a network from denial of service (DOS) attack from, e.g., non-Sony devices or unapproved devices, the discovery request message may include a security field that contains, e.g., sixty four bits. Eight bytes are derived from a Sony secret algorithm described herein. Thus, the inputs to the algorithm may be a secret Sony key and the ESSID of the network to which the new node is trying to connect. On the receiving side (e.g., a node receiving the discovery request message such as a Sony server), if the security field does not match the expected result, the discovery request message is not processed any further and the receiving node does not send a discovery response message.

The tables below show exemplary information that may be used during the discovery request message process and/or included in the discovery request message:

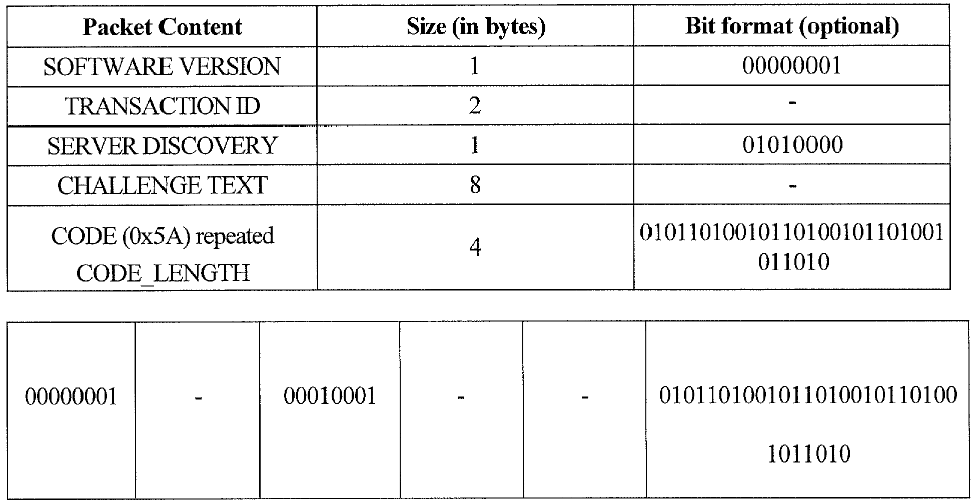

Note that after sending a discovery request message, the sending node (e.g., an electronic sign) may receive back from, e.g., a Sony server a discovery response message after the Sony server processes the discovery request message. The discovery response message may contain a (e.g., Sony) security key and other parameters that may be needed by the requesting node to connect to the electronic sign network. The discovery response message may further include the public key of the server (e.g., the local controller or remote Sony server). Even further, for additional protection, the checksum of the public key may be provided.

Also in exemplary embodiments, the keys (public/private pair) may be generated using *openssl* while the checksum for the public key may be generated using *md5sum.* Additionally, to protect from a man-in-the-middle (MITM) attack, the discovery response message may include a security field which contains sixty four bits. Eight bytes are derived from a secret Sony algorithm. The inputs to the algorithm may be a secret Sony key (e.g., the same one described above) and MAC address of the node sending the discovery response message (e.g., a Sony server). The receiving node (e.g., a Sony electronic sign) runs a corresponding operation when the discovery response message is received and, if the bits in the security field do not match, the receiving node ignores the discovery response message. Thus, it may be appreciated that this scheme protects against a fake node hijacking a genuine Sony connection.

The tables below show exemplary information that may be used during the discovery response message process and/or included in the discovery response message:

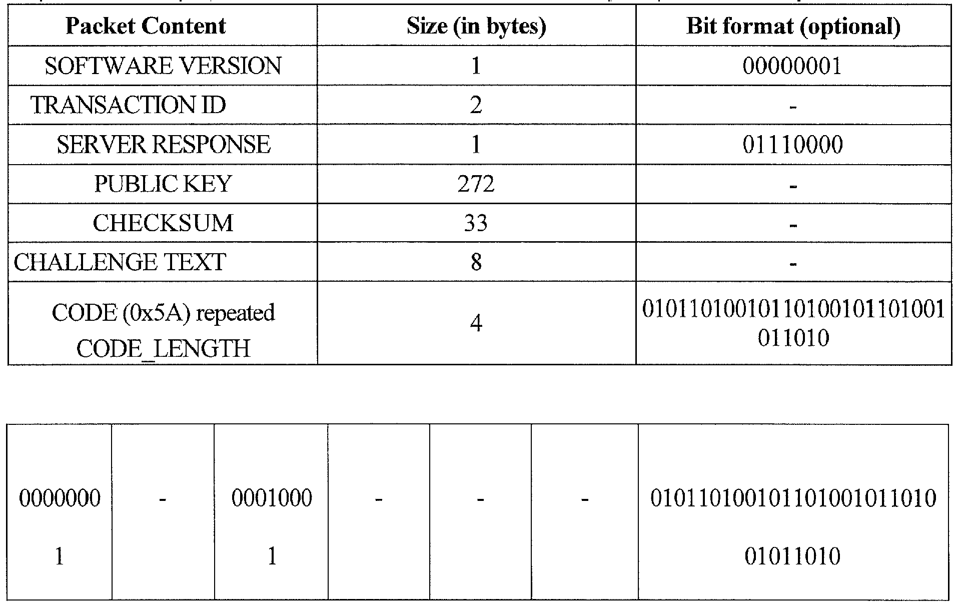

Moving on, present principles also recognize that, upon receiving a discovery response message such as the one described above at a node (e.g., an electronic sign that sent the discovery request message), the node receiving the discovery response message may check the integrity of the message by, e.g., comparing the received checksum with a locally generated checksum for the received public key. Once the checksum is validated, the node receiving the discovery response message may store the public key, MAC address and other details for the node that sent the discovery response message (e.g., a control server) in, e.g., a computer readable storage medium on the node.

Present principles further recognize that, after discovery request and response messages have been processed as set forth above, an "authentication phase" may take place thereafter. In such an authentication phase, a network "passphrase" may be used as set forth below. The passphrase can, e.g., either be embedded in a secure memory of a node (and may also be unique relative to device manufacturers - e.g., Sony - and/or unique relative to each customer, network environment, and/or advertising site), or the passphrase may be something that a network administrator provides to each node/device in a network/subnet.

Present principles also recognize that it is desirable that certain features be automated and/or that new nodes be easily connected to a subnet, providing at least one reason nodes in the network/subnet described herein may have the passphrase embedded in their respective secure memory. Accordingly, when a node such as an electronic sign sends a message (e.g., a connection request message, which will be described shortly) during the authentication phase, the passphrase may be encrypted using a control server's public key and sent along with a checksum parameter, as well as the sending node's public key. The receiving server may then compare the decrypted passphrase with its stored passphrase. If the two match, the server may send a success response indication in a message (e.g., a connection confirm message, which will also be described shortly) back to the node that sent the message to the server.

In accordance with what has been set forth above regarding the authentication phase, the timeout and retry values for a connection authentication process may be as follows:

For, e.g., a Sony control server discovery (e.g., over the Internet):

| | |
|---|---|
| #define TIMEOUT_CONN_REQ | 15 /* 15 seconds */ |
| #define MAX_CONN_RETRY | 20 |

For, e.g., a "local" control server discovery (e.g., communicating over local network such as a subnet):

| | |
|---|---|
| #define TIMEOUT_CONN_REQ | 5 /* 5 seconds */ |
| #define MAX_CONN_RETRY | 3 |

As mentioned above, a connection confirm message may be sent by a node such as an electronic sign when accessing a control server during the "authentication phase" in accordance with present principles. To reiterate, after a "discovery phase" that includes, e.g., the exchange of the discovery request and response messages described above, a node joining a subnet may thereafter attempt to connect to a control server in a secure manner. As also indicated above, based on the discovery response message that was received, the joining node may store the server's MAC address, public key, and other parameters. The joining node may then send a connection request message with a passphrase such as the one described above, the joining node's public key, and a checksum for both. The connection request message may also include an error code and retry counter. This information may be used, along with a connection confirm message, for appropriate action in the case of a connection error between the joining node and the control server.

The tables below show exemplary information that may be used during the connection request message process and/or included in the connection request message:

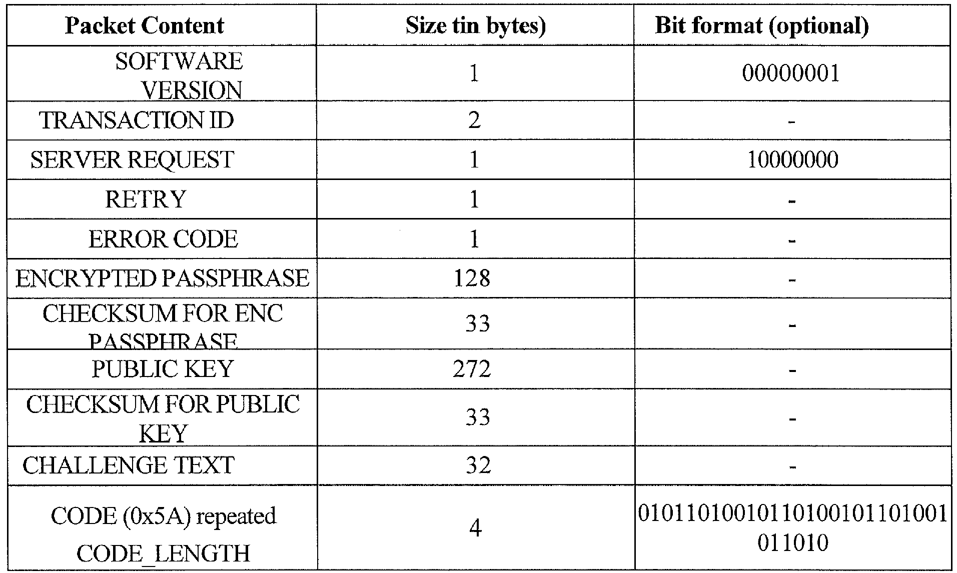

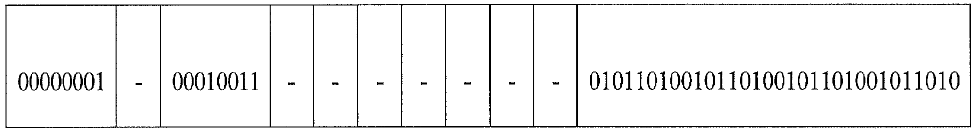

Continuing the present description of the authentication phase, after a control server receives a connection request message such as the one described above, another and optionally final step in process for a node such as an electronic sign to join a network and/or subnet is for the control server to send a confirmation (e.g., a connection confirm message) to the joining node, including a response code. The response code may serve as feedback to the joining node that its connection request has been received by the control server, and that the attempt at an authenticated connection was either a success or failure. Thus, upon receiving a connection request message, the control server checks for integrity by examining checksum values. The control server may then decrypt the encrypted passphrase and check for integrity of the received public key.

The following is a non-exclusive list of exemplary success and error codes in accordance with the principles set forth above:

| | |
|---|---|
| *#define CONN SUCCESS* | |
| *#define PASS CODE FAILED* | *1* |
| *#define ENC CHKSUM ERR* | *2* |
| *#define PUBKEY CHKSUM ERR* | *3* |
| *#define UNKNOWN ERR* | *4* |

Furthermore, to protect man-in-the-middle (MITM) attack, the connection confirm message may include a security field which contains, e.g., sixty four bits. Eight bytes are derived from, e.g., a Sony secret algorithm. The inputs to the algorithm may thus be a secret Sony key and MAC address of the control server. The receiving node (e.g., the joining node) runs a similar operation and, if the bits in the security field do not match, the joining device ignores the connection confirm message. The messages and processes descried above may thus protect against a fake device and/or rogue attack from hijacking a genuine network and/or subnet connection.

The tables below show exemplary information that may be used during the connection confirm message process and/or included in the connection confirm message:

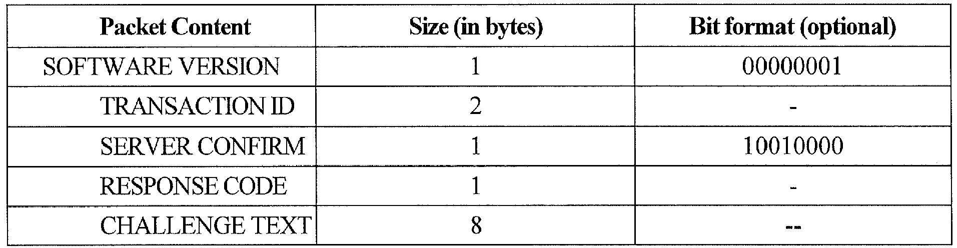

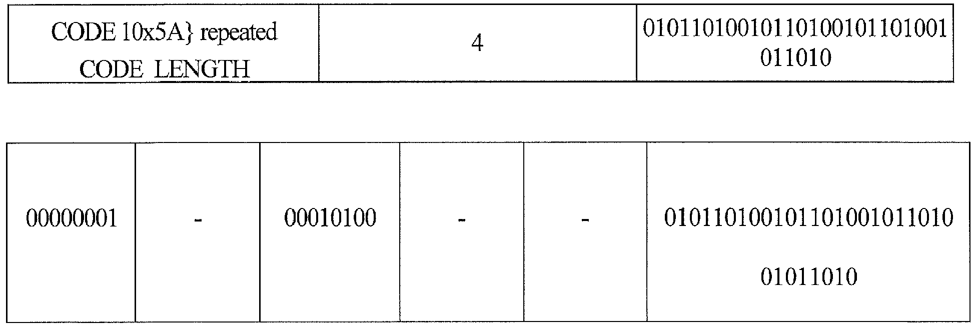

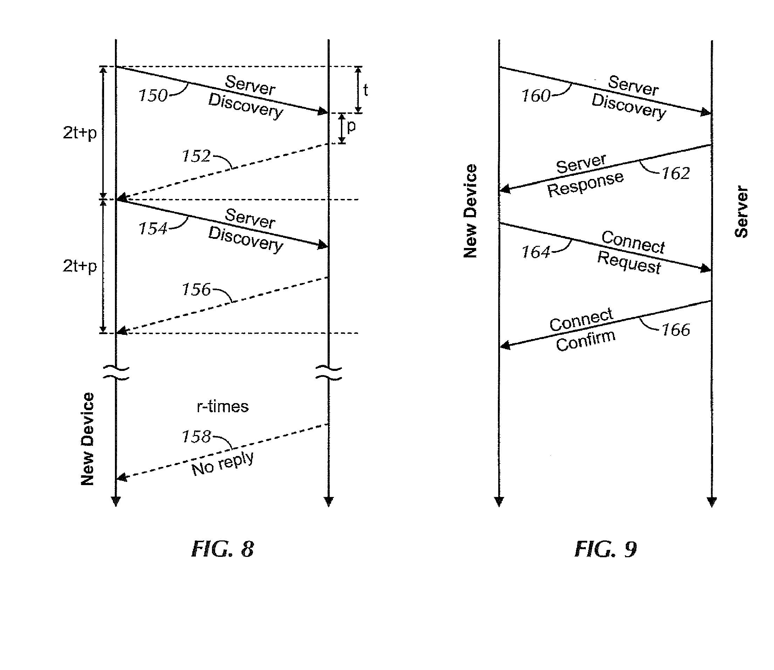

In order to illustrate the processes set forth above for the discovery and authentication phases, attention is directed to Figures 8 and 9. Figure 8 illustrates a failure by a joining node to discover a control server, while Figure 9 illustrates a successful control server discovery and authentication process.

Beginning first with Figure 8, the illustration shows a first arrow 150 which signifies that a joining node such as an electronic sign sends a discovery request message to discover a control server, e.g., either local on the subnet and/or over the Internet. Figure 8 also shows a fragmented arrow 152 indicating the expected discovery response message that, for one reason or another, is not sent from a server that received the discovery request message and/or that is otherwise not received by the joining node.

The joining node may then send a second discovery request message, as illustrated by arrow 154. Another fragmented arrow 156 is shown, again indicating that an expected discovery response message has not been sent from a server and/or that is was otherwise not received by the joining node. Similar to Figure 6, note that as shown in Figure 8, *t* defines the maximum time it takes for a message to reach a node one "hop" away from the sending and "*p*" defines the upper bound on the time required for a receiving node such as a server to process a message, resulting in (2*t* + *p*) being the maximum time for a joining node to receive, e.g., a discovery response message. Also note that Figure 8 indicates that the joining node sends out a discovery request message at least *r* times after failing to receive at least one discovery response message, as indicated by perforated arrow 158, before a timeout occurs.

Moving to Figure 9, an illustration of successful discovery and authentication phases in accordance with present principles is shown. Arrow 160 indicates that a discovery request message is sent from a joining node and received by a control server, and arrow 162 indicates that a discovery response message is then sent by the control server and received by the joining node. In addition, arrow 164 indicates that a connection request message is thereafter sent to the control server that responded to the discovery request message and received by that server, while arrow 166 indicates that the server then sends a connection confirm message that is received by the joining node.

Continuing the detailed description, it is to be understood that in some embodiments, a node that joined a network and/or subnet in accordance with present principles may wish to disconnect from a control server. For example, an electronic sign customer operating a subnet of electronic signs may wish to have the ability to disconnect a device from the control server to which it is connected. Accordingly, a node (e.g., electronic sign) can send a server disconnect message to the control server in accordance with the message exchange principles set forth herein. To protect the network/subnet from fake and/or hijacked server disconnect messages originating from, e.g., non-Sony devices hacking a Sony electronic sign subnet, the server disconnect message may include, e.g., a sixty four bit security field. Eight bytes may be derived from a secret algorithm in accordance with present principles. Further, the inputs to the algorithm may be the secret Sony key and MAC address of the node sending the server disconnect message. Therefore, note that in some embodiments, the server disconnect message may include a secret code (e.g., a subnet-unique security field).

The tables below show exemplary information that may be used during the server disconnect process and/or included in the server disconnect message:

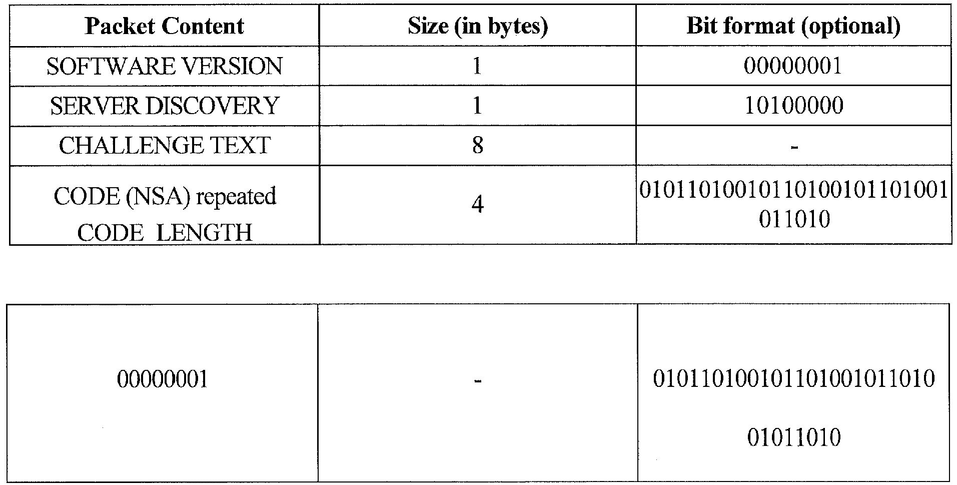

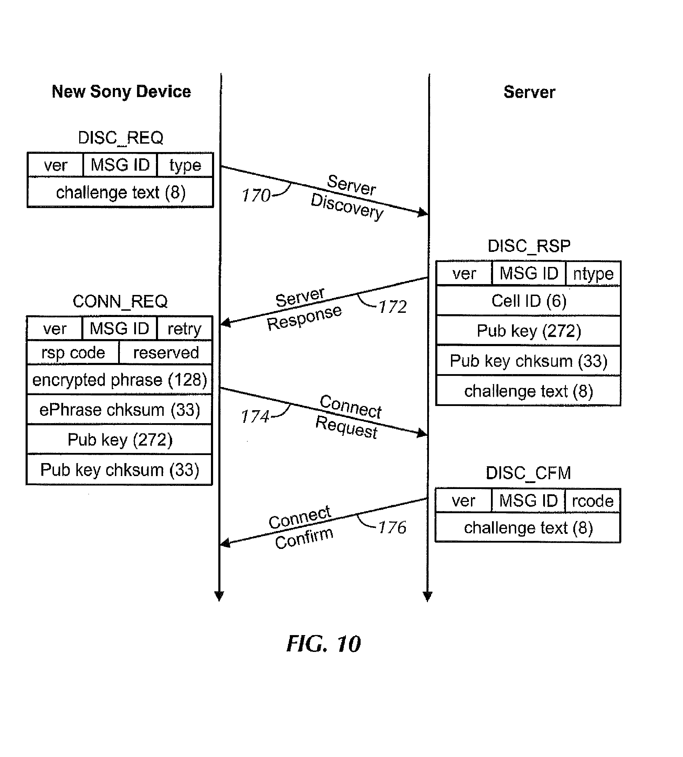

Moving on to Figure 10, another illustration of successful discovery and authentication phases in accordance with present principles is shown. Arrow 170 indicates that a discovery request message is sent from a joining node and received by a control server, and arrow 172 indicates that a discovery response message is then sent by the control server and received by the joining node. In addition, arrow 174 indicates that a connection request message is thereafter sent to the control server that responded to the discovery request message and received by the server, while arrow 176 indicates that the server then sends a connection confirm message that is received by the joining node.

By comparison, Figure 10 is more detailed than Figure 9 in that it also shows message information in close proximity to the arrow for each message that is sent. Thus, the discovery messages are MSG_DISC_REQ and MSG_DISC_RSP, and the connection authentication messages are MSG_CONN_REQ and MSG_CONN_CFM. It is to be understood that the messages may be protected by the challenge text fields shown, which include, e.g., a special bit format calculated by the unique Sony device ID and a Sony-specific algorithm in accordance with the principles set forth herein.

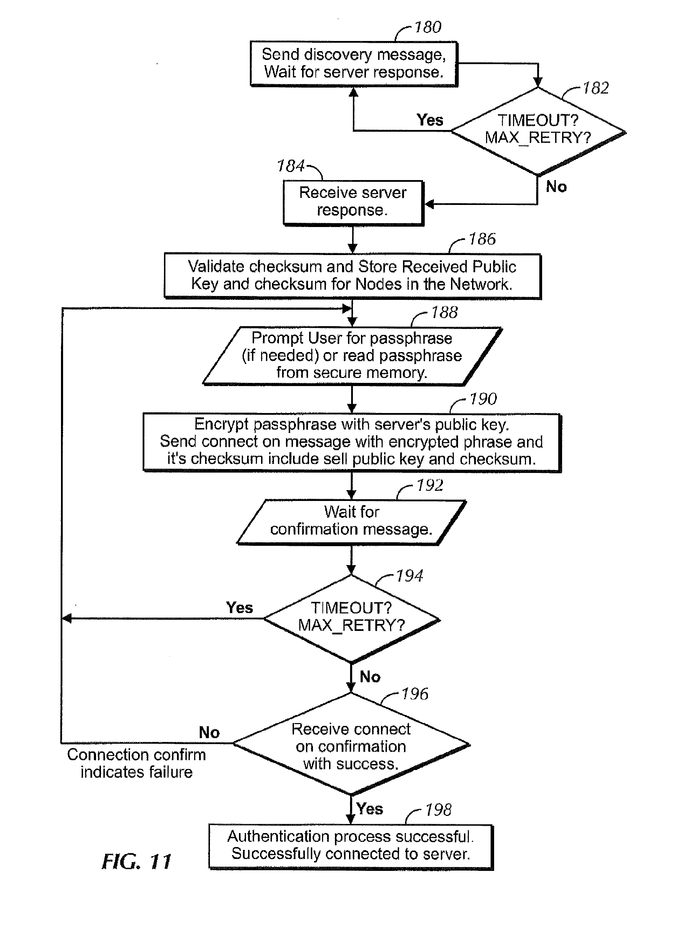

Turning now to Figure 11, a flow chart of example logic to be executed by a node joining a network/subnet in accordance with present principles is shown. Beginning at block 180, a joining node sends a discovery request message and awaits a discovery response message from a server. Then at decision diamond 182, the logic determines whether a discovery response message will be received, and/or whether to retry sending the discovery request message or timeout. If the logic determines that the joining node should resend the discovery request message, the logic reverts back to block 180. Note that if the logic determines that a timeout should occur, the logic may stop at decision diamond 182.

However, if at decision diamond 182 it is determined that a discovery response message is being sent from, e.g., a control server, the logic then moves to block 184 where the discovery response message is received. The logic then moves to block 186, where the logic validates the checksum and stores the public key and checksum it received from the control server for nodes in the network/subnet that the joining node is seeking to join. Thereafter, the logic moves to block 188 where the logic may prompt a user/network administrator for a passphrase such as the one described above, if necessary, and/or may read the passphrase from the secure memory of the joining node. Regardless of how the passphrase is received and/or read by the logic, at block 190 the logic encrypts the passphrase with the control server's public key. The logic also sends a connection request message with the encrypted phrase and its checksum at block 190, which may include the joining node's public key and the corresponding checksum.

Then, at block 192, the logic waits for a connection confirmation message before moving to decision diamond 194. At decision diamond 194, the logic determines whether a timeout should occur and/or whether to resend the connection request message. If the logic determines that a timeout should occur, the logic may either end or revert back to block 188. If, however, the logic determines that it should resend the connection request message, it does so until it is determined that a connection confirm message has been received, as illustrated by decision diamond 196. Also note that as shown in Figure 10, if the logic determines that although a connection confirm message has been received, the message indicates that the connection sought by the joining node has failed, the logic may revert back to block 188 and/or end. However, assuming that the connection confirm message indicates that a connection has been successfully made, the logic continues to block 198 where the logic recognizes that the authentication process has been successful and that the joining node is successfully connected to the control server.

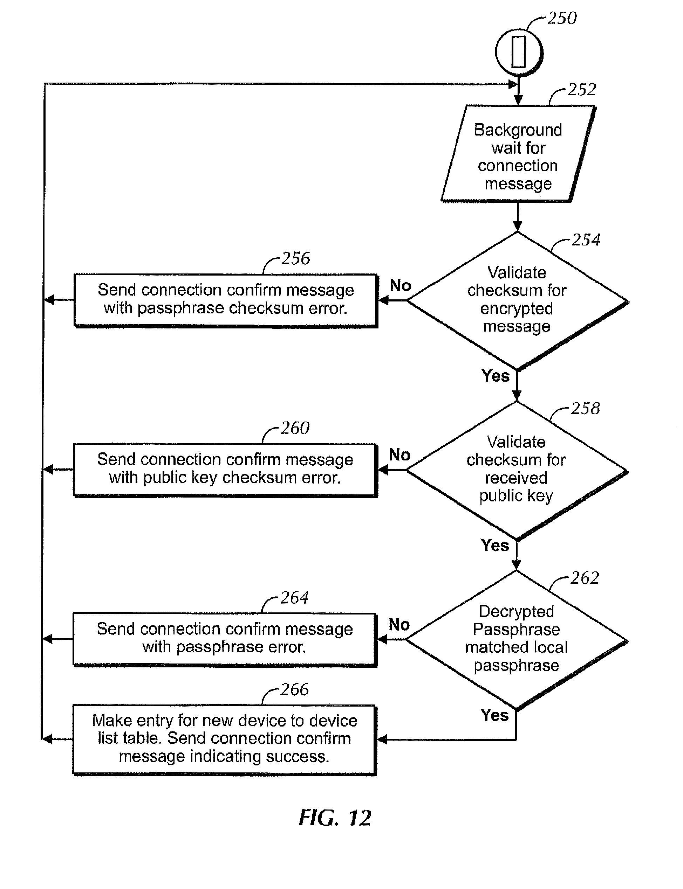

Concluding the detailed description in reference to Figure 12, an exemplary flow chart to be executed by a control server when a node such as an electronic sign seeks to join a network/subnet is shown. The logic starts at circle 250 and then moves to block 252, where the logic of the control server waits for a discovery request message to be received, e.g., using a server background process.

After receiving a discovery request message at block 252, the logic then moves to decision diamond 254 where the logic validates the checksum of the encrypted message it has received. If the message contains an error, the logic moves to block 256 where the logic sends a message back to the joining node with a passphrase checksum error indication and then reverts back to block 252. If, however, the message does not contain an error as determined at decision diamond 254, the logic instead moves to decision diamond 258 where the logic validates the checksum for the received public key. The logic determines if the received message contains an error in this regard, and if it does, the logic moves to block 260 where the logic sends a message back to the joining node with a public key checksum error indication and then reverts back to block 252. If, however, the message does not contain an error as determined at decision diamond 258, the logic instead moves to decision diamond 262.

At decision diamond 262, the logic determines whether the decrypted passphrase matches the locally stored passphrase (e.g., stored and/or programmed on a computer readable storage medium of the control server in accordance with present principles). If the logic determines that the passphrases do not match, the logic moves to block 264 where the logic sends a message back to the joining node with a passphrase error indication and then reverts back to block 252. If, however, the passphrases match, the logic instead moves to block 266 where the logic creates an entry for the new node in a device list table (e.g., on its storage medium) and sends a connection confirm message to the joining node indicating that the connection sought by the joining node was successful.

It may now be appreciated that present principles provide a system and method for electronic signs to securely, easily, and automatically join a network and subnet of electronic signs. For completeness, note that the messages described above (e.g., discovery request or response messages) may use all or part of the message information described above as appropriate, even if not specifically described in any section above. For example, public keys and subnet addresses may be exchanged/sent when desired during either "phase" (e.g., discovery or authentication).

Even further, the messages described above may include other configuration commands for configuring electronic signs for operation and/or for displaying particular advertisements or sequences of advertisements, and may also include IP network settings if desired. Last, it is to be understood that nodes between a control server and electronic sign (e.g., a router) may forward any of the messages described above so that the message reaches the intended recipient (e.g., a server or electronic sign). Additionally, note that the routers may even generate their own discovery, configuration, and/or authentication messages, if desired, in some subnet environments (e.g., if a new router joins a subnet).

It is to be understood that the figures and descriptions provided above generally show methods steps in conjunction with the devices disclosed herein.

While the particular SYSTEM AND METHOD FOR CONFIGURING AN ELECTRONIC SIGN FOR OPERATION AT AN ADVERTISING SITE is herein shown and described in detail, it is to be understood that the subject matter which is encompassed by the present invention is limited only by the claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Various further aspects and features of the present invention are defined in the following numbered clauses:
1. A system, comprising:
   a subnet including plural nodes;
   at least one electronic sign including at least one display and at least one processor controlling the display, the electronic sign establishing a node in the subnet;
   at least one control server including at least one processor communicating with the processor of the electronic sign over the subnet to exchange at least one configuration message with the electronic sign, the control server establishing a node in the subnet;
   wherein the at least one configuration message is useful for configuring the electronic sign for operation upon initial energization of the electronic sign at an advertising site;
   wherein a processor of a node in the subnet determines that one of the at least one configuration messages was successfully sent to another node in the subnet at least based on receipt of a reply message; and
   wherein the processor of the node that sent the configuration message determines the configuration message was unsuccessfully received by the node to which it was sent upon expiration of a timer without receiving a reply message.
2. The system of Clause 1, wherein the configuration message includes a subnet-unique security field repeated a predetermined number of times.
3. The system of Clause 2, wherein the predetermined number of times is known to both the control server and electronic sign before the electronic sign is initially energized to communicate over the subnet.
4. The system of Clause 2, wherein the security field is derived from an algorithm using a subnet-unique secret key.
5. The system of Clause 4, wherein the secret key is stored on a computer readable storage medium of the electronic sign before the electronic sign is initially energized to communicate over the subnet such that it is available to the processor of the electronic sign to communicate over the subnet when the electronic sign is initially energized.
6. The system of Clause 4, wherein the secret key is provided to both the control server and electronic sign by a communication means other than transmission over the subnet.
7. The system of Clause 2, wherein the configuration message is a discovery message to discover a server on the subnet, and the algorithm also uses the ESSID of the subnet.
8. The system of Clause 2, wherein the configuration message is a server response message to a discovery message to discover a server on the subnet, and the algorithm also uses the MAC address of the server sending the server response message.
9. The system of Clause 2, wherein the security field is in the message tail.

## Claims

1. An electronic sign, comprising:
at least one display;
at least one processor controlling the display;
at least one computer readable storage medium accessible to the processor and storing a preprogrammed network address of a control server, the at least one medium programmed with instructions to cause the processor to:
automatically, upon initial energization at an advertising site having plural wireless routers all on a common subnet, connect to a wireless router at the advertising site, joining the common subnet;
after joining the common subnet, access the control server using the network address thereof; and
receive from the control server configuration information useful in configuring the sign for operation, such that the electronic sign after mechanical installation need not be physically accessed by a technician to configure the sign for operation.

2. The sign of Claim 1, wherein the subnet affords Internet access, and the preprogrammed network address is an Internet Protocol (IP) address of a control server on the Internet.

3. The sign of Claim 1, wherein the subnet does not afford Internet access, and the preprogrammed network address is an address of a control server on the local subnet.

4. The sign of Claim 3, wherein the control server on the subnet does not communicate with the Internet.

5. The sign of Claim 1, wherein the processor is also configured to receive from the control server information pertaining to software updates.

6. The sign of Claim 1, wherein the configuration information includes an Internet Protocol (IP) address and a subnet address.

7. The sign of Claim 1, wherein the processor is configured to, after joining the common subnet, determine if the Internet can be accessed through the subnet, and responsive to a determination that the Internet can be accessed through the subnet, the processor establishes a secure connection with the control server using the preprogrammed address, and obtains therefrom information pertaining to a local server on the subnet to configure the sign to communicate with the local server on the subnet, and responsive to a determination that the Internet cannot be accessed through the subnet, the processor establishes communication with the local server on the subnet.

8. A system, comprising:
a subnet including plural nodes;
at least one electronic sign including at least one display and at least one processor controlling the display, the electronic sign establishing a node in the subnet;
at least one control server including at least one processor communicating with the processor of the electronic sign over the subnet to exchange at least one configuration message with the electronic sign, the control server establishing a node in the subnet;
wherein the at least one configuration message is useful for configuring the electronic sign for operation upon initial energization of the electronic sign at an advertising site;
wherein a processor of a node in the subnet determines that one of the at least one configuration messages was successfully sent to another node in the subnet at least based on receipt of a reply message; and
wherein the processor of the node that sent the configuration message determines the configuration message was unsuccessfully received by the node to which it was sent upon expiration of a timer without receiving a reply message.

9. The system of Claim 8, wherein the time for expiration of the timer is established at least by 2t + p, where "t" defines the maximum time for a message to be transmitted from the node sending the message and the node to which it was sent, and where "p" is the maximum time for the configuration message to be processed by the node to which it was sent.

10. The system of Claim 9, wherein the node that sent the configuration message resends the configuration message to the other node "r" times after respective expirations of the timer before a timeout by the node that sent the configuration message, wherein the maximum time before a timeout by the node that sent the configuration message is established by r(2t+p).

11. The system of Claim 8, wherein the configuration message includes a subnet-unique security field repeated a predetermined number of times.

12. The system of Claim 11, wherein the predetermined number of times is known to both the control server and electronic sign before the electronic sign is initially energized to communicate over the subnet.

13. The system of Claim 11, wherein the security field is derived from an algorithm using a subnet-unique secret key.

14. A method, comprising:
automatically, upon initial energization of a digital sign at an advertising site having at least one wireless router on a subnet, connecting the digital sign to a wireless router at the advertising site and joining the subnet;
accessing a control server on the local subnet or on the Internet; and
receiving from the control server at least one configuration packet useful in configuring the sign for operation;
wherein the configuration packet includes a subnet-unique security field in the packet header or tail, the subnet-unique security field being derived from an algorithm using a subnet-unique secret key.

15. The method of Claim 14, wherein after receiving at least one packet, the method further includes sending at least one packet including a disconnect message to the control server to cause the control server to be communicatively disconnected therefrom, the disconnect packet including the subnet-unique security field.
